# EUROPEAN PATENT SPECIFICATION

(11) **EP 2 685 353 B1**
(45) Date of publication and mention of the grant of the patent: **06.11.2019**
(21) Application number: 13174429.4
(22) Date of filing: 28.06.2013
(51) Int. Cl.: G06F 3/01, G06K 9/00, G06K 9/22, G06F 3/0488

(54) **A device and a method for triggering an action based on a shortcut gesture**
Vorrichtung und Verfahren zum Auslösen einer Aktion basierend auf einer abgekürzten Geste
Dispositif et procédé pour déclencher une action basée sur un geste de raccourci

(30) Priority: 29.06.2012 US 201213539230
(43) Date of publication of application: 15.01.2014
(73) Proprietor: Immersion Corporation, San Jose CA 95134 (US)
(72) Inventor: Oliver, Hugues-Antoine, Montreal, Québec H1M 3V9 (CA); Timone, Herve Thu, Candiac, Québec J5R 6N1 (CA)
(74) Representative: Beck Greener LLP

(56) References cited:
- EP-A2- 1 462 920
- WO-A2-98/29791
- US-A1- 2005 015 250
- US-A1- 2007 230 789
- US-A1- 2010 110 025
- US-A1- 2011 102 161
- US-A1- 2011 119 639
- US-A1- 2011 264 491
- US-B1- 8 094 941

## Description

The present invention relates to a device and a method for triggering an action based on a shortcut.

In embodiments, the invention relates to a method and apparatus for providing shortcut touch gestures with haptic feedback.

Some mobile devices such as phones are known to allow users to dial a phone number through a touch screen. In some cases, after a user launches a phone dialing application, the user may have to touch a number key on a keypad presented on the screen, repeat that operation many more times to input a complete phone number, and touch a button on the screen to initiate dialing of the inputted phone number. In some cases, a user may be able to touch a shortcut key, such as a speed dial button presented on the keypad, to trigger dialing of a phone number associated with the speed dial button. If the keypad is small or if the user looks away from the screen, however, the user may make a mistake in dialing the phone number.

Patent document US2011102161 A1 describes systems and methods for haptic confirmation of commands. The system including a microphone; a housing configured to be contacted by a user, and an actuator in communication with the housing, the actuator configured to output a haptic effect to the housing. In particular, US 2011102161 A1 discloses an electronic device (and corresponding method) comprising a user interface (microphone) configured to receive a voice command; a haptic device (actuator) configured to generate a haptic effect at the user interface; and a controller (processor) in signal communication with the user interface and the haptic device, the controller configured to determine a recognition level of the voice command as the voice command is being received at the user interface, the recognition level being based on a similarity between the voice command and a shortcut voice command associated with an application action, trigger the haptic device to generate a haptic effect as the voice command is being received at the user interface, the haptic effect being varied on the recognition level, and trigger the application action associated with the shortcut voice command if the recognition level exceeds a threshold. Patent document WO9829791 A2 describes an instruction input unit for supplying operating instructions to a machine. The unit includes a touchpad, an instruction library and a recognizer. The touchpad receives an input pattern from a user and the instruction library stores a multiplicity of operating instruction patterns. Each operating instruction pattern has an operating instruction associated therewith. Patent document US2010110025 A1 describes a high dimensional touchpad (HDTP) controlling a variety of computer windows systems and applications by detecting a user's finger movement in the left-right, forward-backward, roll, pitch, yaw, and downward pressure directions. Patent document US2007230789 A1 describes a method for controlling an electronic device by handwriting includes the steps: (a) receiving a handwritten pattern for recognition; (b) analyzing the handwritten pattern to divide the handwritten pattern into a primary feature and a secondary feature; (c) searching the storage device for a second predetermined pattern having the primary feature; and (d) comparing the second predetermined pattern with respect to the secondary feature in order to select a third predetermined pattern, in which, the secondary feature matches the handwritten pattern; (e) executing an operation function of the electronic device represented by the third predetermined pattern.

Patent document US2011119639 A1 describes a method of haptic communication at a wireless device. The method may include receiving an input gesture and generating an input gesture message from the input gesture. Patent document US2011264491 A1 describes systems and methods for providing haptic effects. One disclosed system includes a computer-readable medium having program code, the program code including program code defining a haptic widget. Patent document US2005015250 A1 describes a system and/or method that provides a virtual alpha-numeric keyboard based at least in part upon a user real-time input entry within a portable computing device. An input component receives an input providing a recognition component to determine and/or infer possible input entries. Once possible input entries are determined and/or inferred, a rendering component concurrently displays the virtual keys during the input entry. Patent document US8094941 B1 describes techniques to recognize handwritten characters that are written at least partially over the top of one another that are input to a computing device. The handwritten characters may be formed of one or more strokes. According to an aspect described herein, there is provided an electronic device comprising a user interface, a haptic device, and a controller. The user interface may be configured to receive a touch gesture at a surface of the user interface. The touch gesture may comprise a continuous movement on the surface. EP 1462920 discloses gesture feedback techniques that provide feedback to a user regarding the recognition of one or more gestures. The feedback may confirm to a user that a gesture is being correctly recognised or may warn a user that a desired gesture is not being correctly recognised.

The haptic device may be configured to generate a haptic effect at the user interface. The controller may be in signal communication with the user interface and the haptic device. The controller may be configured to determine a recognition level of the touch gesture as the touch gesture is being received at the user interface, and may be configured to trigger the haptic device to generate a haptic effect as the touch gesture is being received at the user interface. The haptic effect may be based on the recognition level. The controller may be further configured to trigger an application action associated with the touch gesture if the recognition level exceeds a threshold.

According to an aspect described herein, the controller may be configured to determine the recognition level of the touch gesture by comparing a loci of points on the surface as the touch gesture is being received with a symbol associated with the application action. According to an aspect described herein, comparing the loci of points with the symbol may include detecting a direction at which the touch gesture is received at the surface. According to an aspect described herein, comparing the loci of points with the symbol may include determining a rate at which the touch gesture is received at the surface.

According to an aspect described herein, the symbol may be selected from the group consisting of: a line, a checkmark, a cross, a circle, a triangle, and a square.

According to an aspect described herein, the application action associated with the touch gesture may comprise a communication action that uses a phone number associated with the symbol.

According to an aspect described herein, the controller may be configured to trigger the haptic device to generate a haptic effect that simulates a coefficient of friction when the recognition level of the touch gesture is low, and to generate a second haptic effect that simulates a texture when the recognition level of the touch gesture is high.

According to an aspect described herein, the controller may be configured to trigger the haptic device to generate the first haptic effect during a first time period when the touch gesture is being received and to generate the second haptic effect during a second time period when the touch gesture is being received.

The present invention is as set out in the appended claims. According to an aspect described herein, the first haptic effect may have a higher frequency and/or a lower magnitude compared to the second haptic effect.

According to a first aspect of the invention there is provided a method as defined in claim 1.

The step of comparing the loci of points with the symbol may comprise detecting a direction at which the touch gesture is received at the surface. The step of comparing the loci of points with the symbol may comprise determining a rate at which the touch gesture is received at the surface.

The symbol may be selected from the group consisting of: a line, a checkmark, a cross, a circle, a triangle, and a square. The application action associated with the predetermined shortcut touch gesture may comprise a communication action that uses a phone number associated with the symbol.

The step of generating the haptic effect may comprise generating a first haptic effect that simulates a coefficient of friction when the recognition level of the touch gesture is low, and generating a second haptic effect that simulates a texture when the recognition level of the touch gesture is high. The first haptic effect may be generated during a first time period when the touch gesture is being received, and wherein the second haptic effect is generated during a second time period when the touch gesture is being received. The first haptic effect may have a higher frequency and/or a lower magnitude compared to the second haptic effect.

According to a second aspect of the invention there is provided an electronic device as defined in claim 8.

The controller may be configured to determine the recognition level of the touch gesture by comparing a loci of points on the surface as the touch gesture is being received with a symbol associated with the application action. The controller may be configured to compare the loci of points with the symbol by detecting a direction at which the touch gesture is received at the surface. The controller may be configured to compare the loci of points with the symbol by determining a rate at which the touch gesture is received at the surface. The symbol may be selected from the group consisting of: a line, a checkmark, a cross, a circle, a triangle, and a square. The application action associated with the predetermined shortcut touch gesture may comprise a communication action that uses a phone number associated with the symbol. The controller may be configured to trigger the haptic device to generate a first haptic effect that simulates a coefficient of friction when the recognition level of the touch gesture is low, and to generate a second haptic effect that simulates a texture when the recognition level of the touch gesture is high.

The controller may be configured to trigger the haptic device to generate the first haptic effect during a first time period when the touch gesture is being received and to generate the second haptic effect during a second time period when the touch gesture is being received. The first haptic effect may have a higher frequency and/or a lower magnitude compared to the second haptic effect.

According to an aspect described herein there is provided a mobile communication device, comprising: a user interface configured to receive a touch gesture at a surface of the user interface, the touch gesture comprising a continuous movement on the surface; and, a controller in signal communication with the user interface, the controller configured to: determine whether the touch gesture is associated with a symbol, and, cause a transmission of a communication to a communication recipient associated with the symbol. The symbol may be selected from the group consisting of: a line, a checkmark, a cross, a circle, a triangle, and a square.

These and other aspects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

Embodiments will now be described in detail with reference to the accompanying drawings, in which:
FIG. 1 schematically illustrates an apparatus in accordance with an embodiment of the invention.
FIG. 2A schematically illustrates symbols that represent predetermined shortcut touch gestures for the apparatus of Fig. 1.
FIG. 2B schematically illustrates a touch gesture applied to the apparatus of Fig. 1.
FIG. 3 schematically illustrates a method in accordance with an embodiment of the invention.

Any reference to "embodiment" of the invention not falling under the scope of the claims should be considered as illustrative example for understanding the invention. Furthermore, the embodiments and/or examples that are not covered by the appended claims are considered as not being part of the present invention.

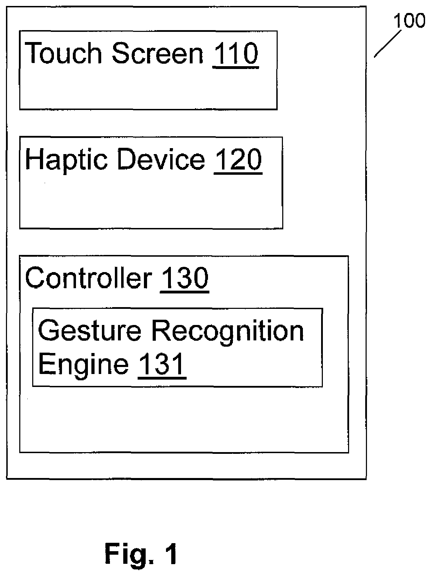

FIG. 1 illustrates an embodiment of an electronic device 100 that may trigger an application action based on a touch gesture. Rather than having to trigger an application action through multiple touch inputs, such as touching a menu button to access a menu of an application, followed by touching an option on the menu to select an action to trigger, and followed by touching a command button to trigger the selected action, the user may apply the touch gesture as a shortcut to triggering the action. The user's touch gesture may correspond to one or more predetermined shortcut touch gestures, which may have been predetermined by a device vendor or by the user. Further, a haptic effect may be generated to let a user know whether a touch gesture being applied by that user is close to one or more predetermined shortcut touch gestures. Each predetermined shortcut touch gesture may be associated with an application action, and applying the shortcut gesture may trigger the associated action. As a user's touch gesture comes closer to matching a predetermined shortcut touch gesture, the haptic effect may be varied to reflect, for example, an increasing similarity between the user's touch gesture and the predetermined shortcut touch gesture. A user may thus be able to gauge through the haptic effect whether his or her touch gesture will be recognized by device 100.

In an embodiment, as illustrated in Fig. 1, device 100 may include a touch screen 110 or any other touch-sensitive interface, a haptic device 120, and a controller 130. Touch screen 110 may be configured to sense a touch input on the screen and one or more locations on the screen at which the touch input is received. The touch screen may be configured to sense touch input from a finger, a stylus, or any combination thereof. In an embodiment, the touch input may be a touch gesture. A touch gesture may be, for example, a touch input that makes one or more continuous movements on screen 110. If the touch gesture includes a plurality of continuous movements on screen 110, the plurality of movements may be made sequentially or simultaneously. Simultaneous movements may come from, for example, two fingers both moving on screen 110. In an embodiment, device 100 may have a touch pad instead of or in addition to a touch screen.

Haptic device 120 of device 100 may be configured to generate a haptic effect at a surface of touch screen 110 or at any other location of device 100. As discussed below, the haptic effect generated by haptic device 120 may be based on a touch gesture received at screen 110. Haptic device 120 may include piezoelectric material, a motor, a voice coil, an electrostatic device, a solenoid, a fiber of electroactive polymers (EAP), an ultrasonic energy actuator, an eccentric mass actuator, or any combination thereof.

Controller 130 of device 100 may be operatively coupled to touch screen 110 and to haptic device 120, and may be configured to trigger the haptic device to generate a haptic effect. The haptic effect generated by haptic device 120 may be based on a level to which controller 130 recognizes a user's touch gesture, which may be based on how closely the user's touch gesture matches one or more predetermined shortcut touch gestures. In an embodiment, this recognition level may be determined by a gesture recognition engine 131 implemented in controller 130. As more of the touch gesture is received, the recognition level may increase because the touch gesture may match more of a predetermined shortcut touch gesture. If the touch gesture matches, in whole or in part, more than one predetermined touch gesture, the recognition level may be based on the predetermined touch gesture that most closely matches the touch gesture. Change in the recognition level may be used by controller 130 to trigger the haptic device to change a haptic effect being generated at screen 110. The change in the haptic effect may indicate to a user whether his or her touch gesture is close to matching one of the predetermined shortcut touch gestures of device 100. Controller 130 may include a microprocessor, logic circuit, or any other computing circuitry.

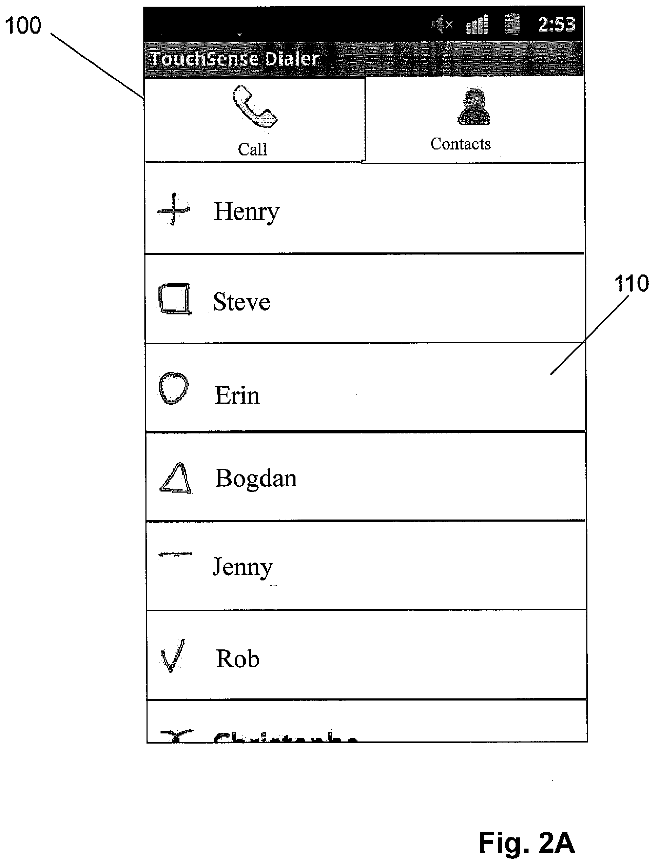

A predetermined shortcut touch gesture may be represented by a symbol. Some symbols are illustrated on an example view of touch screen 110 of device 100 in Fig. 2A. Fig. 2A shows multiple symbols that may each represent a predetermined shortcut touch gesture. The symbols include a cross, a square, a circle, a triangle, a horizontal line, and a check mark. Other symbols may include a vertical line, a diagonal line, a pentagon, a rectangle, or any other geometrical figure (e.g., a figure defined by a polynomial) or shape. In an embodiment, a user may be able to form a new symbol by moving his or her finger on screen 110. As discussed in more detail below, a predetermined shortcut touch gesture may further be represented by a direction, rate, or size at which the symbol is formed. A circle symbol that is formed in a clockwise direction, for example, may represent a different predetermined shortcut touch gesture than a circle symbol that is formed in a counterclockwise direction. A circle symbol that is formed at one rate may represent a different predetermined shortcut touch gesture than a circle symbol that is formed at, for example, a faster rate. In an embodiment, a predetermined shortcut touch gesture may be associated with an amount of pressure by which the touch gesture is applied. For example, forming a line symbol while applying one level of pressure may represent a different shortcut than forming the line symbol while applying a higher level of pressure.

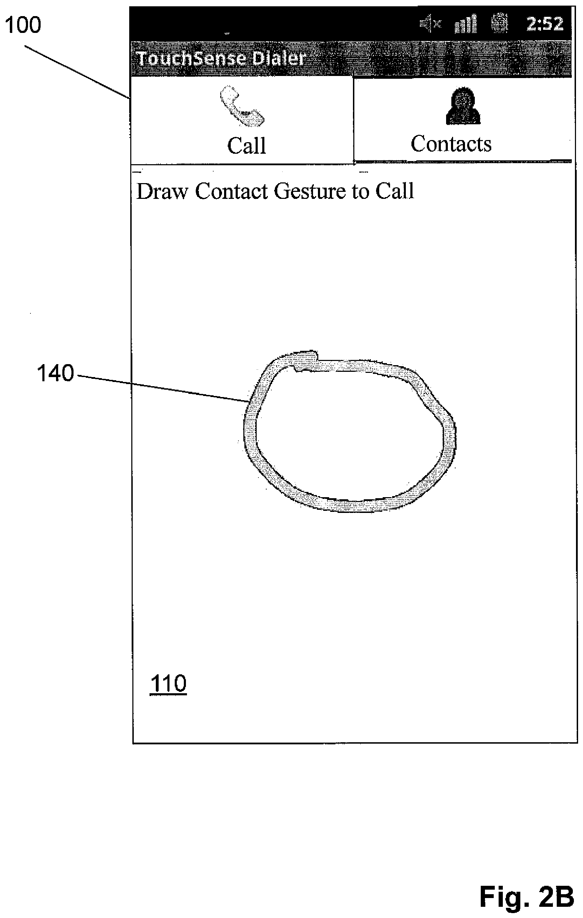

A user may apply a predetermined shortcut touch gesture by forming its representative symbol on screen 110. Fig. 2B illustrates an example in which symbol 140 is formed on screen 110. As discussed in more detail below, one application action that a predetermined shortcut touch gesture may be associated with includes dialing of a phone call to a desired recipient. The predetermined shortcut touch gesture allows the phone call to be dialed without needing a keypad. In the illustration of Fig. 2B, applying the predetermined shortcut touch gesture represented by symbol 140 may trigger dialing of a phone call to Erin, the recipient associated with the predetermined shortcut touch gesture.

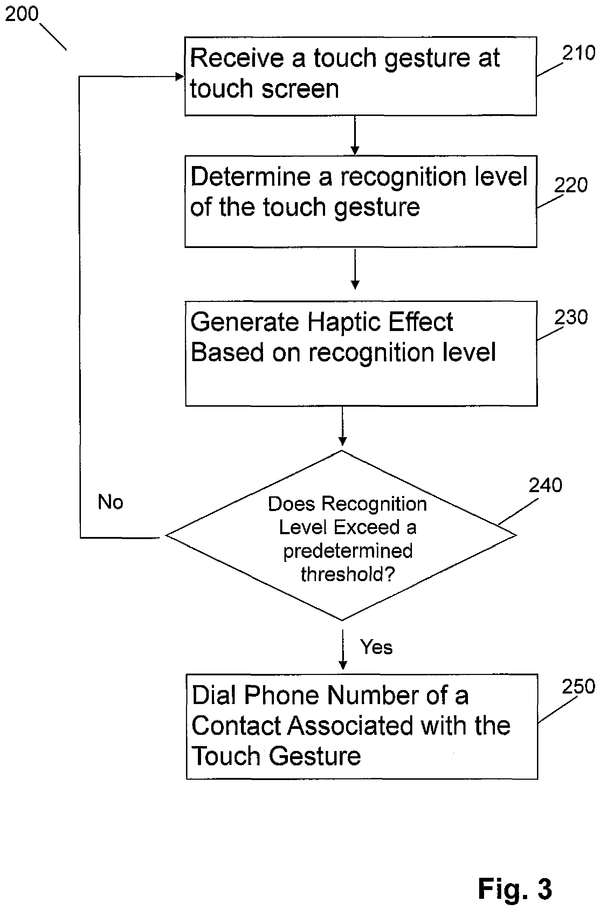

More details for triggering an application action are presented in Fig. 3, which illustrates a method 200 for triggering an application action based on a touch gesture. The method may provide a faster or more convenient way of triggering an application action, which may be associated with a predetermined shortcut touch gesture. If a user applies a touch gesture that is recognized as the predetermined shortcut touch gesture, the application action associated with the predetermined shortcut touch gesture may be triggered.

At operation 210, the user's touch gesture may be received at a surface of a user interface of an electronic device. The user interface may be touch screen 110 of device 100 or may be any other user interface. The touch gesture may include one or more continuous movements of a finger, stylus, or other object at a surface of the user interface. The movement may be represented as a loci of points at which the surface has been touched or is being touched. For example, the touch gesture illustrated in Fig. 2B may be represented as a loci of points that are indicative of a circular movement. The loci of points may be tracked by gesture recognition engine 131 of controller 130, or by any other computing device. Gesture recognition engine 131 may, for example, sample screen 110 for a current location at which screen 110 is being touched, and may update the loci of points with the current location. A higher sampling rate (e.g., 100 Hz) may be selected when greater granularity of the touch gesture's movement is needed, while a lower sampling rate (e.g., 10 Hz) may be selected to reduce power consumption. A timestamp may be associated with each point to track a direction and rate of the touch gesture's movement.

A touch gesture may include a temporary break in contact between the finger, stylus, or other object with the surface of the user interface. For example, for applying a touch gesture represented by the cross symbol illustrated in Fig. 2A, the movement of the touch gesture may require a user to temporarily lift his finger between forming a first line of the symbol and a second line of the symbol. Operation 210 may distinguish whether the break in contact is part of the touch gesture, or whether the break in contact indicates that the touch gesture has been completed. In an embodiment, operation 210 may include determining how long the break in contact lasts. If the break in contact lasts less than a threshold, such as several hundred milliseconds or one second, the break in contact may be determined to be part of the touch gesture.

As a touch gesture is being received at operation 210, a recognition level of the touch gesture may be determined at operation 220. The recognition level may be determined by gesture recognition engine 131 or by any other computing device. In an embodiment, the recognition level may indicate a level to which the touch gesture being received from the user matches one or more predetermined shortcut touch gestures. If the one or more predetermined shortcut touch gestures are represented by one or more symbols, determining the recognition level may be based on comparing the touch gesture to the one or more symbols. More particularly, the one or more symbols may be compared to the loci of points that represent the touch gesture's movement. For example, each of the symbols illustrated in Fig. 2A may be compared to the loci of points formed by the touch gesture illustrated in Fig. 2B. The recognition level may vary based on how much of the touch gesture has been received. For the touch gesture illustrated in Fig. 2B, a loci of points during a first part of the gesture's movement may form a quarter circle, while the loci of points during a later part of the gesture's movement may form a semicircle. The recognition level may increase during the movement to reflect a greater level to which the loci of points matches the circle symbol, which represents the predetermined shortcut touch gesture for dialing a call to Erin.

In another example, a touch gesture's movement may create a loci of points that form a line. Here, a recognition level may increase during the movement because of an increasing similarity between the loci of points and the symbol that represents the predetermined shortcut touch gesture for dialing a call to Jenny. However, if the movement of the touch gesture continues, such as by moving in a vertical direction, the recognition level may decrease to a lower level because the loci of points during that part of the movement now has a decreasing similarity to the symbol associated with dialing a call to Jenny. However, the recognition level may increase from that lower level if the movement continues on to form a square, which represents the predetermined shortcut touch gesture for dialing a call to Steve. If the movement continues further, after it has formed a square, the recognition level may decrease again. It may decrease in proportion to how much the loci of points now deviates from the square symbol, or may directly decrease to a minimal level because the loci of points will now be unable to match any of the symbols illustrated in Fig. 2A.

Determining the recognition level at operation 220 may also be based on, in an embodiment, a direction of the movement of the touch gesture being received, a rate of the movement, a size of the touch gesture, or any combination thereof. For example, if a predetermined shortcut touch gesture is represented by a circle symbol formed in a clockwise manner, a touch gesture that moves in a counterclockwise manner may not be able to reach a maximum recognition level. In another example, if a predetermined shortcut touch gesture is represented by a cross symbol that forms a vertical line after a horizontal line is formed, a touch gesture that moves in a vertical direction before it moves in a horizontal direction may not be able to reach a maximum recognition level.

If determining the recognition level is based on a rate of movement, the determining may examine whether the rate falls within one or more ranges. If determining the recognition level is based on a size of the touch gesture, the determining may examine whether the size falls within one or more ranges. The size of the touch gesture may be based on a range of coordinates occupied by the loci of points of the touch gesture's movement or may be based on any other metric.

In an embodiment, a shortcut touch gesture may have to be made within a maximum elapsed time. For example, determining the recognition level may be based on only the loci of points that have been received within a time window. Movement detected outside the time window may be considered part of a separate predetermined shortcut touch gesture. Limiting the elapsed time during which a shortcut gesture can be made may reduce a chance of erroneous recognitions. For example, if a user's hand accidentally grazes touch screen 110, any loci of points made by the hand movement during the grazing will be excluded from a loci of points used to recognize an intentional touch gesture that the user makes at a much later time. Thus, if the user's grazing motion makes an incomplete, unrecognized circle and no further touch input is received within a maximum elapsed time, any attempt to recognize the touch gesture may then be reset and any loci of points from the grazing motion will not be considered for recognizing future touch gestures.

After the recognition level is determined, a haptic effect may be generated at operation 230 based on the recognition level. The haptic effect may include a vibration, thermal effect, electrostatic effect, or any other haptic effect. In an embodiment, as the recognition level is updated, the haptic effect may be updated. For example, if a recognition level is initially at a minimal value because the touch gesture is just being received, no haptic effect may be applied. As the recognition level increases, the haptic effect may be configured to simulate a friction at the user interface that is additional to the natural friction from the surface of the user interface. That is, the haptic effect may simulate one or more coefficients of friction at the user interface surface. If the recognition level continues increasing, the haptic effect may transition to simulating a texture that may be different from the natural texture of the surface of the user interface. If the recognition level decreases, such as when the loci of points of the touch gesture's movement deviates from all predetermined shortcut touch gestures, the haptic effect may transition again, such as to an electrostatic or thermal effect.

In an embodiment, simulating a friction or a texture may be based on varying a frequency or amplitude of a haptic effect. For example, the haptic effect that simulates a coefficient of friction may have a higher frequency and lower amplitude than the haptic effect that simulates a texture. In a more specific example, the coefficient of friction may be simulated with a vibration haptic effect at a frequency of 500 Hz and a magnitude that is 20% of a maximum magnitude. The texture may be simulated with a vibration haptic effect at a frequency of 100 Hz and at the maximum magnitude. For both haptic effects, the vibration may be applied in bursts that are spaced, for example, four milliseconds apart.

As the touch gesture is being received or after it has been received, an application action associated with the touch gesture may be triggered at operation 250 if the recognition level exceeds a threshold, as determined at operation 240. If the recognition level fails to exceed a threshold, the touch gesture may be too incomplete to sufficiently match a predetermined shortcut touch gesture, or may deviate too much from all of the predetermined shortcut touch gestures. Method 200 may then continue receiving the touch gesture at operation 210. If predetermined shortcut touch gestures are represented by symbols, one example threshold may require a user's touch gesture to match no more than one of the symbols and may require the match to be sufficiently high (e.g., the touch gesture must form at least 90% of the symbol). In some cases, the threshold level may be customized by a user.

The application action that is triggered may include launching of an application by an operating system, activating a voice command mode, playing of a song having a certain title, artist, or album, or, as illustrated in Figs. 2A-2B, initiating a phone-based connection with a recipient associated with a predetermined shortcut touch gesture. Initiating the phone-based connection may include dialing the recipient's phone number, presenting a text messaging interface that has the recipient's phone number in a destination field, or presenting an e-mail or social media interface that has the recipient's contact information in the destination field.

In the embodiments described above, device 100 may be a mobile device, a remote control, a tablet, desktop, or notebook computer, electronic display, or any other electronic device. Controller 130 may include a microprocessor, logic circuit, or any other computing circuitry.

## Claims

1. A method for triggering an application action based on a shortcut touch gesture, in an electronic device (100) comprising a user interface (110), a haptic device (120) and a controller (130), the method comprising:
receiving (210), by said user interface (110), a touch gesture at a surface of said user interface (110) of said electronic device (100), the touch gesture comprising a continuous movement on the surface;
determining (220), by said controller (130), a recognition level of the touch gesture during the receiving, the recognition level being based on a similarity between the touch gesture and a predetermined shortcut touch gesture associated with an application action;
generating, by said haptic device (120), a haptic effect at the user interface during the receiving and varying the haptic effect based on the recognition level; and
triggering (250), by said controller (130), the application action associated with the predetermined shortcut touch gesture as the touch gesture is being received if the recognition level exceeds a threshold, wherein the threshold is that the touch gesture matches no more than one predetermined shortcut touch gesture and the recognition level is at least 90%.

2. The method of claim 1, wherein the determining the recognition level of the touch gesture comprises comparing a loci of points on the surface as the touch gesture is being received with a symbol (140) associated with the application action.

3. The method of claim 2, wherein the comparing the loci of points with the symbol (140) comprises detecting a direction at which the touch gesture is received at the surface.

4. The method of claim 3, wherein the comparing the loci of points with the symbol (140) comprises determining a rate at which the touch gesture is received at the surface.

5. The method of claim 2, wherein the application action associated with the predetermined shortcut touch gesture comprises a communication action that uses a phone number associated with the symbol (140).

6. The method of claim 1, wherein generating the haptic effect comprises generating a first haptic effect that simulates a coefficient of friction when the recognition level of the touch gesture is low, and generating a second haptic effect that simulates a texture when the recognition level of the touch gesture is high.

7. The method of claim 6, wherein the first haptic effect has a higher frequency and/or a lower magnitude compared to the second haptic effect.

8. An electronic device (100) comprising:
a user interface (110) configured to receive a touch gesture at a surface of the user interface, the touch gesture comprising a continuous movement on the surface;
a haptic device (120) configured to generate a haptic effect at the user interface; and
a controller (130) in signal communication with the user interface and the haptic device, the controller configured to
determine a recognition level of the touch gesture as the touch gesture is being received at the user interface, the recognition level being based on a similarity between the touch gesture and a predetermined shortcut touch gesture associated with an application action,
trigger the haptic device to generate a haptic effect as the touch gesture is being received at the user interface, the haptic effect being varied based on the recognition level, and
trigger the application action associated with the predetermined shortcut touch gesture as the touch gesture is being received if the recognition level exceeds a threshold, wherein the threshold is that the touch gesture matches no more than one predetermined shortcut touch gesture and the recognition level is at least 90%.

9. The electronic device (100) of claim 8, wherein the controller (130) is configured to determine the recognition level of the touch gesture by comparing a loci of points on the surface as the touch gesture is being received with a symbol (140) associated with the application action.

10. The electronic device (100) of claim 9, wherein the controller (130) is configured to compare the loci of points with the symbol (140) by detecting a direction at which the touch gesture is received at the surface.

11. The electronic device (100) of claim 10, wherein the controller (130) is configured to compare the loci of points with the symbol (140) by determining a rate at which the touch gesture is received at the surface.

12. The electronic (100) device of claim 9, wherein the application action associated with the predetermined shortcut touch gesture comprises a communication action that uses a phone number associated with the symbol (140).

13. The electronic device (100) of claim 8, wherein the controller (130) is configured to trigger the haptic device (120) to generate a first haptic effect that simulates a coefficient of friction when the recognition level of the touch gesture is low, and to generate a second haptic effect that simulates a texture when the recognition level of the touch gesture is high.

14. The electronic device (100) of claim 13, wherein the first haptic effect has a higher frequency and/or a lower magnitude compared to the second haptic effect.

## Patentansprüche

1. Verfahren zum Auslösen einer Anwendungsaktion basierend auf einer Abkürzungsberührungsgeste in einer elektronischen Vorrichtung (100), die eine Benutzerschnittstelle (110), eine haptische Vorrichtung (120) und einen Controller (130) umfasst, wobei das Verfahren folgende Schritte umfasst:
Empfangen (210), durch die Benutzerschnittstelle (110), einer Berührungsgeste an einer Oberfläche der Benutzerschnittstelle (110) der elektronischen Vorrichtung (100), wobei die Berührungsgeste eine kontinuierliche Bewegung an der Oberfläche umfasst;
Bestimmen (220), durch den Controller (130), einer Erkennungsstufe der Berührungsgeste während des Empfangens, wobei die Erkennungsstufe auf einer Ähnlichkeit zwischen der Berührungsgeste und einer vorbestimmten Abkürzungsberührungsgeste, die mit einer Anwendungsaktion verknüpft ist, basiert;
Generieren, durch die haptische Vorrichtung (120), einer haptischen Wirkung an der Benutzerschnittstelle während des Empfangens und Variieren der haptischen Wirkung basierend auf der Erkennungsstufe; und
Auslösen (250), durch den Controller (130), der Anwendungsaktion, die mit der vorbestimmten Abkürzungsberührungsgeste verknüpft ist, wenn die Berührungsgeste empfangen wird, falls die Erkennungsstufe eine Schwelle überschreitet, wobei die Schwelle darin besteht, dass die Berührungsgeste mit nicht mehr als einer vorbestimmten Abkürzungsberührungsgeste übereinstimmt und die Erkennungsstufe mindestens 90 % beträgt.

2. Verfahren nach Anspruch 1, wobei das Bestimmen der Erkennungsstufe der Berührungsgeste das Vergleichen von Punktstellen an der Oberfläche, wenn die Berührungsgeste empfangen wird, mit einem Symbol (140), das mit der Anwendungsaktion verknüpft ist, umfasst.

3. Verfahren nach Anspruch 2, wobei das Vergleichen der Punktstellen mit dem Symbol (140) das Detektieren einer Richtung, in der die Berührungsgeste an der Oberfläche empfangen wird, umfasst.

4. Verfahren nach Anspruch 3, wobei das Vergleichen der Punktstellen mit dem Symbol (140) das Bestimmen einer Geschwindigkeit, mit der die Berührungsgeste an der Oberfläche empfangen wird, umfasst.

5. Verfahren nach Anspruch 2, wobei die Anwendungsaktion, die mit der vorbestimmten Abkürzungsberührungsgeste verknüpft ist, eine Kommunikationsaktion umfasst, die eine Telefonnummer verwendet, die mit dem Symbol (140) verknüpft ist.

6. Verfahren nach Anspruch 1, wobei das Generieren der haptischen Wirkung das Generieren einer ersten haptischen Wirkung, die einen Reibungskoeffizienten simuliert, wenn die Erkennungsstufe der Berührungsgeste niedrig ist, und das Generieren einer zweiten haptischen Wirkung, die eine Textur simuliert, wenn die Erkennungsstufe der Berührungsgeste hoch ist, umfasst.

7. Verfahren nach Anspruch 6, wobei die erste haptische Wirkung eine höhere Frequenz und/oder eine geringere Größe im Vergleich zu der zweiten haptischen Wirkung aufweist.

8. Elektronische Vorrichtung (100), umfassend:
eine Benutzerschnittstelle (110), die konfiguriert ist, um eine Berührungsgeste an einer Oberfläche der Benutzerschnittstelle zu empfangen, wobei die Berührungsgeste eine kontinuierliche Bewegung an der Oberfläche umfasst;
eine haptische Vorrichtung (120), die konfiguriert ist, um eine haptische Wirkung an der Benutzerschnittstelle zu generieren; und
einen Controller (130) in Signalkommunikation mit der Benutzerschnittstelle und der haptischen Vorrichtung, wobei der Controller konfiguriert ist zum
Bestimmen einer Erkennungsstufe der Berührungsgeste, wenn die Berührungsgeste an der Benutzerschnittstelle empfangen wird, wobei die Erkennungsstufe auf einer Ähnlichkeit zwischen der Berührungsgeste und einer vorbestimmten Abkürzungsberührungsgeste, die mit einer Anwendungsaktion verknüpft ist, basiert,
Auslösen der haptischen Vorrichtung, um eine haptische Wirkung zu generieren, wenn die Berührungsgeste an der Benutzerschnittstelle empfangen wird, wobei die haptische Wirkung basierend auf der Erkennungsstufe variiert wird, und
Auslösen der Anwendungsaktion, die mit der vorbestimmten Abkürzungsberührungsgeste verknüpft ist, wenn die Berührungsgeste empfangen wird, falls die Erkennungsstufe eine Schwelle überschreitet, wobei die Schwelle darin besteht, dass die Berührungsgeste mit nicht mehr als einer vorbestimmten Abkürzungsberührungsgeste übereinstimmt und die Erkennungsstufe mindestens 90 % beträgt.

9. Elektronische Vorrichtung (100) nach Anspruch 8, wobei der Controller (130) konfiguriert ist, um die Erkennungsstufe der Berührungsgeste durch das Vergleichen von Punktstellen an der Oberfläche, wenn die Berührungsgeste empfangen wird, mit einem Symbol (140), das mit der Anwendungsaktion verknüpft ist, zu bestimmen.

10. Elektronische Vorrichtung (100) nach Anspruch 9, wobei der Controller (130) konfiguriert ist, um die Punktstellen mit dem Symbol (140) durch das Detektieren einer Richtung, in der die Berührungsgeste an der Oberfläche empfangen wird, zu vergleichen.

11. Elektronische Vorrichtung (100) nach Anspruch 10, wobei der Controller (130) konfiguriert ist, um die Punktstellen mit dem Symbol (140) durch das Bestimmen einer Geschwindigkeit, mit der die Berührungsgeste an der Oberfläche empfangen wird, zu vergleichen.

12. Elektronische Vorrichtung (100) nach Anspruch 9, wobei die Anwendungsaktion, die mit der vorbestimmten Abkürzungsberührungsgeste verknüpft ist, eine Kommunikationsaktion umfasst, die eine Telefonnummer verwendet, die mit dem Symbol (140) verknüpft ist.

13. Elektronische Vorrichtung (100) nach Anspruch 8, wobei der Controller (130) konfiguriert ist, um die haptische Vorrichtung (120) auszulösen, um eine erste haptische Wirkung zu generieren, die einen Reibungskoeffizienten simuliert, wenn die Erkennungsstufe der Berührungsgeste niedrig ist, und um eine zweite haptische Wirkung zu generieren, die eine Textur simuliert, wenn die Erkennungsstufe der Berührungsgeste hoch ist.

14. Elektronische Vorrichtung (100) nach Anspruch 13, wobei die erste haptische Wirkung eine höhere Frequenz und/oder eine niedrigere Größe im Vergleich zu der zweiten haptischen Wirkung aufweist.

## Revendications

1. Procédé pour déclencher une action d'application sur la base d'un geste tactile de raccourci, dans un dispositif électronique (100) comprenant une interface utilisateur (110), un dispositif haptique (120) et un dispositif de commande (130), le procédé comprenant :
recevoir (210), par ladite interface utilisateur (110), un geste tactile au niveau d'une surface de ladite interface utilisateur (110) dudit dispositif électronique (100), le geste tactile comprenant un mouvement continu sur la surface ;
déterminer (220), par ledit dispositif de commande (130), un niveau de reconnaissance du geste tactile pendant la réception, le niveau de reconnaissance étant basé sur une similarité entre le geste tactile et un geste tactile de raccourci prédéterminé associé à une action d'application ;
générer, par ledit dispositif haptique (120), un effet haptique au niveau de l'interface utilisateur pendant la réception et faire varier l'effet haptique sur la base du niveau de reconnaissance ; et
déclencher (250), par ledit dispositif de commande (130), l'action d'application associée au geste tactile de raccourci prédéterminé à mesure que le geste tactile est reçu si le niveau de reconnaissance dépasse un seuil, le seuil étant que le geste tactile correspond à pas plus d'un geste tactile de raccourci prédéterminé et le niveau de reconnaissance est au moins 90 %.

2. Procédé selon la revendication 1, dans lequel la détermination du niveau de reconnaissance du geste tactile comprend comparer un centre de points sur la surface à mesure que le geste tactile est reçu, à un symbole (140) associé à l'action d'application.

3. Procédé selon la revendication 2, dans lequel la comparaison du centre de points au symbole (140) comprend détecter une direction dans laquelle le geste tactile est reçu au niveau de la surface.

4. Procédé selon la revendication 3, dans lequel la comparaison du centre de points au symbole (140) comprend déterminer une vitesse à laquelle le geste tactile est reçu au niveau de la surface.

5. Procédé selon la revendication 2, dans lequel l'action d'application associée au geste tactile de raccourci prédéterminé comprend une action de communication qui utilise un numéro de téléphone associé au symbole (140) .

6. Procédé selon la revendication 1, dans lequel générer l'effet haptique comprend générer un premier effet haptique qui simule un coefficient de frottement lorsque le niveau de reconnaissance du geste tactile est faible, et générer un second effet haptique qui simule une texture lorsque le niveau de reconnaissance du geste tactile est élevé.

7. Procédé selon la revendication 6, dans lequel le premier effet haptique a une fréquence plus élevée et/ou une amplitude plus faible par comparaison au second effet haptique.

8. Dispositif électronique (100) comprenant :
une interface utilisateur (110) configurée pour recevoir un geste tactile au niveau d'une surface de l'interface utilisateur, le geste tactile comprenant un mouvement continu sur la surface ;
un dispositif haptique (120) configuré pour générer un effet haptique au niveau de l'interface utilisateur ; et
un dispositif de commande (130) en communication de signal avec l'interface utilisateur et le dispositif haptique, le dispositif de commande étant configuré pour
déterminer un niveau de reconnaissance du geste tactile à mesure que le geste tactile est reçu au niveau de l'interface utilisateur, le niveau de reconnaissance étant basé sur une similarité entre le geste tactile et un geste tactile de raccourci prédéterminé associé à une action d'application,
déclencher le dispositif haptique pour générer un effet haptique à mesure que le geste tactile est reçu au niveau de l'interface utilisateur, l'effet haptique étant amené à varier sur la base du niveau de reconnaissance, et
déclencher l'action d'application associée au geste tactile de raccourci prédéterminé à mesure que le geste tactile est reçu si le niveau de reconnaissance dépasse un seuil, le seuil étant que le geste tactile correspond à pas plus d'un geste tactile de raccourci prédéterminé et le niveau de reconnaissance est au moins 90 %.

9. Dispositif électronique (100) selon la revendication 8, dans lequel le dispositif de commande (130) est configuré pour déterminer le niveau de reconnaissance du geste tactile par comparaison d'un centre de points sur la surface à mesure que le geste tactile est reçu, à un symbole (140) associé à l'action d'application.

10. Dispositif électronique (100) selon la revendication 9, dans lequel le dispositif de commande (130) est configuré pour comparer le centre de points au symbole (140) par détection d'une direction dans laquelle le geste tactile est reçu au niveau de la surface.

11. Dispositif électronique (100) selon la revendication 10, dans lequel le dispositif de commande (130) est configuré pour comparer le centre de points au symbole (140) par détermination d'une vitesse à laquelle le geste tactile est reçu au niveau de la surface.

12. Dispositif électronique (100) selon la revendication 9, dans lequel l'action d'application associée au geste tactile de raccourci prédéterminé comprend une action de communication qui utilise un numéro de téléphone associé au symbole (140).

13. Dispositif électronique (100) selon la revendication 8, dans lequel le dispositif de commande (130) est configuré pour déclencher le dispositif haptique (120) pour générer un premier effet haptique qui simule un coefficient de frottement lorsque le niveau de reconnaissance du geste tactile est faible, et générer un second effet haptique qui simule une texture lorsque le niveau de reconnaissance du geste tactile est élevé.

14. Dispositif électronique (100) selon la revendication 13, dans lequel le premier effet haptique a une fréquence plus élevée et/ou une amplitude plus faible par comparaison au second effet haptique.
